# EUROPEAN PATENT SPECIFICATION

(11) **EP 2 118 539 B1**
(45) Date of publication and mention of the grant of the patent: **07.09.2011**
(21) Application number: 08728695.1
(22) Date of filing: 31.01.2008
(51) Int. Cl.: F16K 7/12, F16K 37/00

(54) **METHOD AND APPARATUS TO MONITOR DIAPHRAGM CONDITION**
VERFAHREN UND VORRICHTUNG ZUR ÜBERWACHUNG DES MEBRANZUSTANDES
PROCÉDÉ ET APPAREIL POUR SURVEILLER UN ÉTAT DE DIAPHRAGME

(30) Priority: 27.02.2007 US 711402
(43) Date of publication of application: 18.11.2009
(73) Proprietor: Fisher Controls International LLC, St. Louis, MO 63136 (US)
(72) Inventor: O'HARA, Dennis, Eugene, Strafford, NH 03884 (US); BURKE, Joseph, Michael, Lee, NH 03824 (US)
(74) Representative: Bohnenberger, Johannes
(86) International application number: PCT/US2008/052630
(87) International publication number: WO 2008/106264

(56) References cited:
- DE-A1- 19 849 700
- US-A1- 2003 001 590
- US-A1- 2005 092 079

## Description

### FIELD OF THE DISCLOSURE

This disclosure relates generally to diaphragms for process control and, more particularly, to methods and apparatus to monitor diaphragm condition. A diaphragm monitoring for flow control devices has been disclosed in document US 2005/0092079, for example

### BACKGROUND

It is known in the process industry that diaphragms are used in various applications to control fluid flow through process control devices, such as control valves or regulators. In the process industry, diaphragms are typically flexible, pressure responsive elements used to transmit a force to a control element or to form a variable restriction in a flow path to control a fluid flow. One typical diaphragm application uses a diaphragm as a loading element in a spring-and-diaphragm actuator to provide an actuator thrust in response to a control pressure applied to the actuator to position a control element in a control valve. Other typical diaphragm applications use the diaphragm as a fluid flow control element, such as in a diaphragm or Weir valve or a pressure regulator.

In typical spring-and-diaphragm actuator applications, a flexible diaphragm is coupled to a diaphragm plate, which is attached to an actuator rod, to form a diaphragm assembly. The diaphragm assembly is retained within an actuator assembly between an upper and a lower diaphragm casing to form a body or housing having a sealed loading chamber and a vent chamber. An actuator spring is positioned in the actuator assembly to bias the diaphragm assembly to a known position without a loading pressure. In operation, a fluid or loading pressure is applied to the loading chamber through a process control instrument, such as a positioner, to oppose a bias force generated by the actuator spring to displace the actuator rod of the diaphragm assembly. By controlling the loading pressure from the process control instrument, the position of actuator rod of the diaphragm assembly can be controlled, which may position a control element within the control valve coupled thereto.

Another typical diaphragm valve has a diaphragm that is displaced within a fluid flow path by an actuator member to interrupt or modulate fluid flow therethrough. That is, an actuator is used to temporarily deform the diaphragm control element, which directly provides a variable restriction in a fluid flow path. Thus, in this type of diaphragm valve the process fluid may only contact a diaphragm and a flow passage while various other valve parts are protected from the potentially harsh effects of the process fluid. As such, diaphragm valves are well suited for chemical processing or handling applications including, but not limited to, cosmetics, pharmaceuticals, food and beverage processing, and the processing of toxic and/or corrosive fluids.

Another example of a diaphragm-based control element is a fluid pressure regulator. Unlike the previously described control valves, a regulator relies upon a force balance between a force proportional to the outlet pressure of the regulator and a loading force supplied by an adjustable loading assembly to control a fluid pressure at an output of the regulator. That is, a regulator generally receives a relatively high pressure fluid from a fluid supply source and outputs the fluid at a relatively lower fluid pressure while providing a stable, constant output for a wide range of output loads (i.e., changes in flow requirements or fluid capacity, etc.). Persons of ordinary skill in the art appreciate that pressure regulators generally operate by controlling the position of a restricting element (e.g., a valve) using a balancing force generated by an outlet fluid pressure acting on a diaphragm against a counteracting force generated by the loading element (e.g., a spring).

For all of the above-referenced applications, the diaphragm is selected to have elastic, wear and chemical resistance properties suitable for a particular application. Despite selecting the properties of the diaphragm for improved performance, the diaphragm may still deteriorate due to environmental and chemical exposure including thermal conditions and oxidation or changes in physical properties related to the number of flexures or cycles experienced by the diaphragm during use. Further, in any of the above-referenced applications, the diaphragm is enclosed in a manner that makes visual inspection extremely difficult and time consuming because the control device has to be disassembled to inspect the condition of the diaphragm.

As such, preventative maintenance procedures are employed to replace diaphragms on a periodic and/or scheduled basis. Unfortunately, many diaphragms used in the process industry do not need to be replaced on a periodic schedule as the degradation is a function of the diaphragm use and process exposure.

### SUMMARY

In accordance with one example, a valve includes a valve body and a fluid passage through the valve body. The fluid passage includes an inlet, an outlet, and a diaphragm within the fluid passage to control the flow of fluid through the passage. The valve also includes a sensor to monitor at least one condition associated with wear of the diaphragm.

In accordance with another example, a diaphragm condition monitoring apparatus includes a diaphragm and a sensor operatively coupled to the diaphragm. The apparatus to monitor diaphragm condition also includes a control unit to receive signals from the sensor to determine the diaphragm condition.

In accordance with yet another example, a method to determine a diaphragm condition includes receiving a measured signal from a sensor operatively coupled to a diaphragm and obtaining a baseline signal. The method to determine the diaphragm condition compares the measured signal to the baseline signal to determine the diaphragm condition.

In accordance with yet another example, a method to replace a diaphragm includes receiving a diaphragm condition indicator based on a signal received from a diaphragm sensor. The method to replace a diaphragm also includes servicing a diaphragm within a field serviceable device in response to the condition indicator.

### BRIEF DESCRIPTION OF THE DRAWINGS

FIGS. 1A and 1B are cross-sectional views of an example diaphragm valve in a closed and open position, respectively, the valve including an example diaphragm sensor.

FIGS. 2A, 2B, and 3 are detailed views of embodiments of the diaphragm sensor of FIGS. 1A and 1B.

FIG. 4 is an example data pilot indicative of output signals from the example diaphragm sensors of FIGS. 1A, 1B, 2A, 2B, and 3.

FIG. 5 is a flow diagram of an example process to monitor diaphragm condition using the example diaphragm sensors of FIGS. 1A, 1B, 2A, 2B, and 3.

FIG. 6 is a flow diagram of an example process to monitor a diaphragm for service needs using the example diaphragm sensors of FIGS. 1A, 1B, 2A, 2B, and 3.

### DETAILED DESCRIPTION

The example diaphragm assembly uses sensors to provide a signal indicative of a condition of the pressure responsive component or diaphragm of the diaphragm assembly. The example diaphragm assembly described herein enables a determination of the extent of degradation of the diaphragm while in service to substantially reduce the maintenance costs associated with manually inspecting the diaphragm. While the example diaphragm assembly described herein is discussed in view of a diaphragm or Weir valve and the diaphragm sensors are described as conductivity sensors or strain gages for detecting a condition of pressure responsive diaphragm, persons of ordinary skill in the art will appreciate that any other type of diaphragm, such as a diaphragm used in a spring-and-diaphragm actuator or a regulator, may be used in conjunction with other types of electrical, optical, acoustic, and/or physical sensing devices to monitor the physical or material characteristics (conditions) of the diaphragm. Additionally, while the present examples describe a diaphragm constructed of an elastomer and/or rubber-like material, persons of ordinary skill in the art will appreciate that any flexible or elastic diaphragms, such as metallic diaphragms, may be used and measured without limitation. Persons of ordinary skill in the art will also appreciate that a diaphragm may have flexible regions that move in response to applied pressure, as well as regions of less flexibility to accommodate, for example, diaphragm mounting.

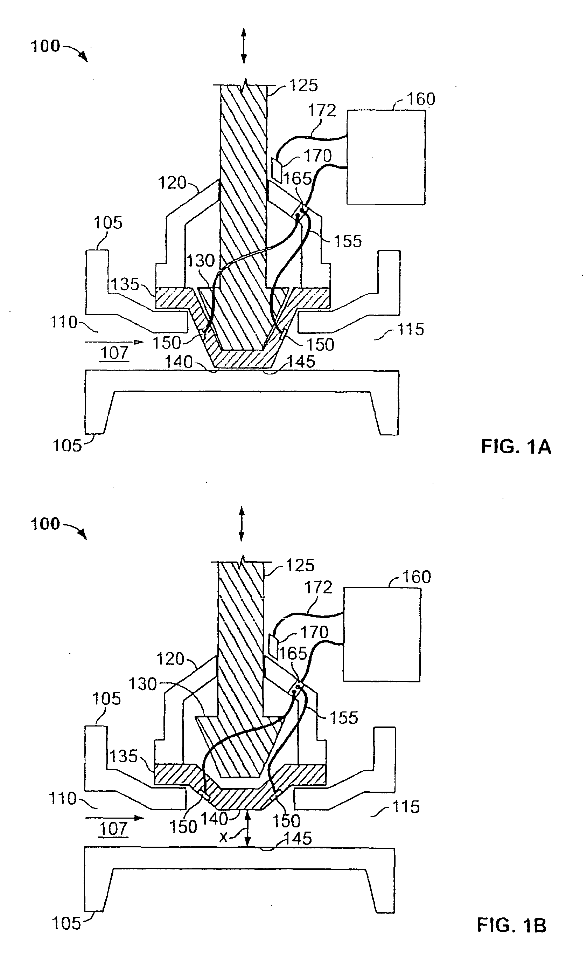

In reference to FIG. 1A, a cross-sectional view of an example diaphragm valve 100 is illustrated. The example valve 100 includes a valve body 105 and a fluid passage 107 that connects to a fluid pipeline (not shown). The fluid passage 107 receives fluid at an inlet passageway 110 that couples to an outlet passageway 115. In the illustrated example, a bonnet 120, which is mounted to the valve body 105, guides a valve stem 125 having a plunger 130 at one end of the valve stem 125. The plunger 130 is configured to forcibly move a diaphragm 135 in a downward direction (i.e., into the fluid passage 107), thereby displacing a portion of the diaphragm 135 and forming a variable restriction. Thus, in operation, when a bottom surface 140 of the diaphragm 135 moves towards a surface 145 of the valve body 105, fluid flow from the inlet passageway 110 to the outlet passageway 115 may be partially or totally prevented or blocked.

In the illustrated example, one or more diaphragm sensors 150 are placed on the diaphragm 135 or embedded (e.g., bonded or molded), to/in the diaphragm 135. As discussed in further detail below, the diaphragm sensor(s) 150 provide(s) a characteristic signal indicative of the diaphragm 135 status or condition via sensor leads or wires 155 to an external control unit 160. As discussed in further detail below, the valve 100 may also or alternatively operate with an embedded controller or, more generally, a control unit.

Generally speaking, the diaphragm 135 includes various properties or parameters based on, among other things, the type of material from which it is made and the operating conditions that the diaphragm 135 experiences during its use. During its use, the diaphragm 135 may be exposed to various process media and process temperatures while cycling (i.e., being repetitively flexed), thereby causing various diaphragm 135 properties or parameters to change (e.g., pliability or compliance, compression set or offset etc.). For example, a new diaphragm (i.e., one that has not yet been in service or use) may have a particular durometer (i.e., hardness) value that is related to the previously mentioned properties that changes over time as a result of chemical attack, heat application from process media, repeated cycles of operation, and/or age. A manufacturer and/or user of the diaphragm 135 may empirically and/or theoretically determine how much this durometer changes before the diaphragm 135 needs replacement. Thus, the sensor(s) 150 may provide a signal indicative of the durometer of the diaphragm 135 on a periodic basis, a scheduled basis, or every certain number of cycles of operation and compare the measurement to a baseline measurement made when the diaphragm 135 was new. If the resulting difference between the baseline reading or measurement and the current measured value exceeds or falls below a threshold (e.g., a relative change and/or an absolute change), then the end-user of the diaphragm 135 may schedule a repair during regular plant maintenance to reduce expenses or may replace the diaphragm 135 prior to an actual failure.

While the above example describes that the diaphragm 135 has a property indicative of durometer that may be detected by the diaphragm sensor(s) 150. other or additional properties or conditions of the diaphragm 135 that can be detected by the diaphragm sensor(s) 150 include, but are not limited to, an opacity, an optical response (e.g., a measured brightness, a measured optical frequency, etc.), a force response, a resistance, a conductance, a voltage, a current, a signal propagation delay, and/or an acoustic response (e.g., a measured audio intensity, a measured audio frequency, etc.).

To communicate such information, the sensor leads or wires 155 may exit the bonnet 120 through a bonnet opening 165, which may include an airtight grommet, for example. The control unit 160 may receive signals from the diaphragm sensor(s) 150 to determine whether the properties, conditions, or parameters (value ranges) associated with the diaphragm 135 are within an acceptable or appropriate range, above/below a threshold indicative of a need to service the diaphragm 135. If one or more properties, conditions, or parameter values are indicative of a problem or potential failure of the diaphragm 135, the control unit 160 may alert an operator and/or control system that maintenance is needed.

In the illustrated example, a diaphragm activation indicator/switch 170 provides an indication of whether the diaphragm 135 is at rest (e.g., the valve 100 is fully open/closed), fully operational (e.g., the valve 100 is fully closed/open), and/or at an intermediate position. Persons of ordinary skill in the art will appreciate that the diaphragm activation switch 170 may provide finite positional steps (e.g., open, closed, partially open/closed, etc.), or the switch 170 may be implemented using an encoder to provide greater positional resolution. The diaphragm activation switch 170 may also employ a Hall-effect sensor to determine the position of the diaphragm 135 and/or the plunger 130. Signals from the diaphragm activation switch 170 may be provided to the external control unit 160 via leads or wires 172. The control unit 160 may include, but is not limited to, a personal computer (PC), a microcontroller, a microprocessor, or a programmable logic controller (PLC), such as the GE^{®} Fanuc series PLCs.

FIG. 1B is a cross-sectional view of the example diaphragm valve 100 of FIG. 1A. However, in FIG. 1B, the diaphragm valve 100 is shown in a fully open position, which allows process fluid to pass freely from the inlet passageway 110 to the outlet passageway 115. Thus, if the diaphragm valve 100 is a normally open type valve, then the diaphragm 135 is typically under the least amount of stress or no stress at all (e.g., a relaxed state) when in the fully open position as depicted in FIG. 1B. However, the diaphragm 135 experiences the most physical stress (e.g., due to stretching) after traversing a diameter (indicated by the dimension line x) of the valve body 105 (e.g., a fully operational state). The control unit 160 may acquire readings from the diaphragm sensor(s) 150 for any position of the diaphragm 135 and/or the plunger 130 along their paths of travel. However, characteristic signs of advanced wear, chemical degradation, and/or other failure signs may typically be determined by comparing the sensor signal(s) to one or more earlier measured baseline values associated with known positions (e.g., open, closed, intermediate, etc.), as discussed in further detail below.

Persons of ordinary skill in the art will appreciate that various positions of the valve stem 125 and plunger 130 will effectively control or modulate the flow of the fluid. Additionally, while the illustrated example diaphragm valve 100 is shown as a normally open valve that closes (i.e., substantially inhibits or prevents fluid flow) upon a downward movement of the plunger 130 and the diaphragm 135, normally closed diaphragm valves may also be used.

Elastic materials, elastomers, fabric-impregnated/woven elastomers, and/or metals may be used to construct the diaphragm 135. The use of such materials to implement the diaphragm 135 may enable the diaphragm 135 to be resistant to harmful or damaging effects due to chemical attack, high/low temperatures, and/or to improve durability of the diaphragm 135 (e.g., cycle life). The diaphragm 135 may also be constructed out of a flexible polymeric material such as, for example, synthetic rubber known to those skilled in the art and/or a high strength fabric, such as nylon.

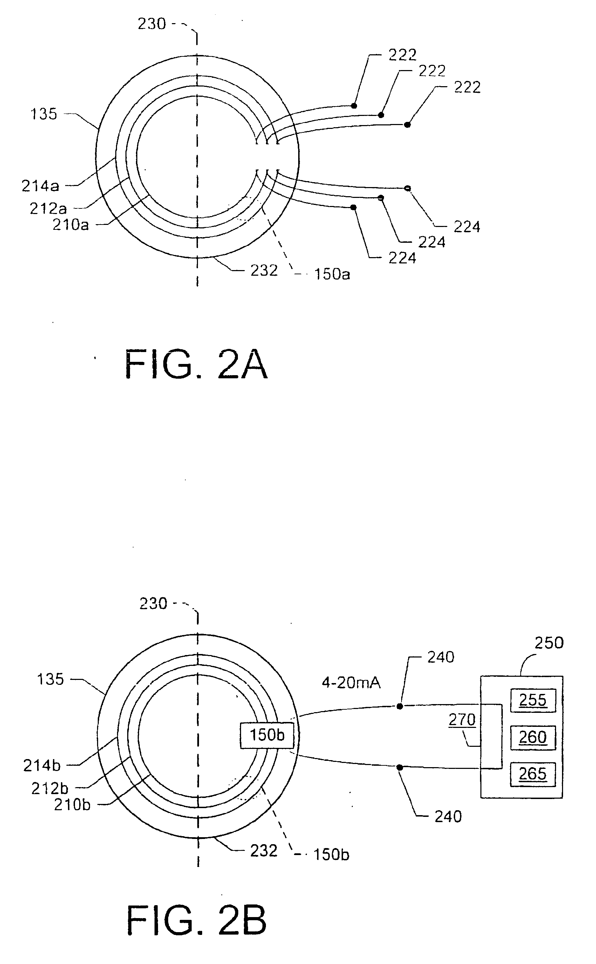

FIG. 2A is a plan view of one example diaphragm sensor 150a mounted on the diaphragm 135. In the illustrated example, the diaphragm sensor 150a includes three conductive wires 210a, 212a, and 214a. While FIG. 2A depicts the example diaphragm 135 as generally circular in shape having the conductive wires 210a, 212a, 214a arranged in a concentric manner. Persons of ordinary skill in the art will appreciate that the diaphragm 135 may be any other shape (e.g., non-circular) and include any number of additional or fewer conductive and/or resistive wires 210a, 212a, 214a arranged in any other manner. Each of the wires 210a, 212a, 214a includes a first endpoint 222 and a second endpoint 224, which may be connected to a voltmeter, ohmmeter, conductivity tester, and/or a processor capable of measuring voltage, resistance, and/or determining open/closed circuits.

In operation, the example diaphragm 135 of FIG. 2A experiences various forces as it flexes as a result of being displaced (e.g., by the plunger 130 or an air pressure) in the +/- x direction. For example, as the diaphragm 135 traverses the distance x, as shown in FIG. 1B, the material of the diaphragm along a centerline 230 may have a maximum displacement, while the material of the diaphragm at a diaphragm edge 232 may have little or no displacement due to securement to the valve body 105. Depending on several factors, the diaphragm 135 may experience greater amounts of wear and/or physical breakdown at various locations between the centerline 230 and the diaphragm edge 232. Factors include, but are not limited to, frictional forces from the plunger 130 on the diaphragm 135, stretching forces on the diaphragm 135, and/or process fluid wear on the diaphragm 135 (which may be greater on the inlet passageway 110 side than the outlet passageway 115 side).

The example diaphragm sensor 150a, which includes the plurality of conductive wires 210a, 212a, 214a, maybe configured to have a cycle life less than that of the material composing the diaphragm 135. In that case, the control unit 160 may be configured to monitor the wires 210a, 212a, 214a for a closed circuit. As such, when one of the plurality of wires 210a, 212a. 214a breaks or becomes intermittently broken due to, for example, a high number of open/close diaphragm cycles, then the control unit 160 detects an open circuit and/or an intermittently open circuit. In response to detection of an open condition (i.e., a mechanical or electrical break in one or more of the wires 210a, 212a, 214a), the control unit 160 may alert process maintenance personnel of the open circuit to indicate that the diaphragm 135 may be nearing the end of its useful life.

Similarly, the control unit 160 may monitor the example diaphragm sensor 150 (in this case, the plurality of wires 210a, 212a, 214a) for a resistive value, a conductive value, and/or monitor for an applied voltage. Persons of ordinary skill in the art may also appreciate that conductive traces forming a capacitive-type sensor may also be formed, thereby permitting a capacitance or an impedance measurement indicative of the present condition of the diaphragm 135.

It may be further appreciated that the diaphragm sensor 150a may be configured in a current loop. The current loop configuration (e.g., 4-20 milliamperes (mA)) is particularly well suited for process control environments having electrical noise and lengthy sensor leads. The 4-20mA current loop configuration is also not affected by voltage drops in the signal wires. Measurements of the diaphragm sensor 150a in a current loop configuration may be accomplished by measuring the voltage drop across a known resistance value (e.g., a 1% precision resistor rated at 10K ohms).

A baseline resistance, conductance, and/or voltage value may be stored in a memory of the control unit 160, and each subsequent measurement of the diaphragm sensor 150a may be compared to the baseline measurement. Thus, if the baseline resistance of the plurality of wires 210a, 212a, 214a is 50 Ohms when the diaphragm 135 and the wires 210a, 212a, 214a are new, the control unit 160 may invoke a warning signal when the subsequent measurements cross or approach a predetermined threshold value. Such a threshold value may be theoretically or empirically determined so that the warning signals are triggered prior to a failure condition of the diaphragm 135.

FIG. 2B illustrates an example diaphragm 135 configured with a diaphragm sensor 150b having a 4-20mA configuration at sensor leads 240. In operation, the example diaphragm sensor 150b monitors wires 210b, 212b, 214b for an open/closed circuit condition, a resistance value, and/or a conductivity value. Depending on the measured value from the wires 210b, 212b, 214b, a proportional current value is produced on the sensor leads 240. As such, an operator need only monitor an output of the two wire leads 240 rather than the pair of leads 222, 224 from each of the plurality of wires 210a, 212a, 214a as shown in FIG. 2A.

In the illustrated example of FIG. 2B, the diaphragm sensor 130b includes a control unit 250. The control unit 250 may include a processor 255, a memory 260, an input/output (I/O) port 265, and a sensor interface circuit 270. The sensor interface circuit 270 may be an analog-to-digital converter for a diaphragm sensor having an analog output or may be a counter-type circuit for a diaphragm sensor providing a digital output. The processor 255 may include a microprocessor having computational capabilities, such as arithmetic functions to calculate differences between measured values and baseline values. The processor 255 may also calculate differences between measured values and threshold values so that an appropriate alarm/alert signal may be generated and conveyed via the I/O port 265. The memory 260 may be used to, for example, store baseline measurement values and/or programming instructions (e.g., software, machine readable and executable instructions) for the processor 255. Output signals provided by the diaphragm sensor 150b may be either analog or digital, and such signals may or may not be proportional to corresponding physical parameters of the diaphragm 135. As such, the memory 260 may also store algorithms and/or look-up tables to convert measured signals into physical characteristics of the diaphragm (e.g., units of force, units of resistance, etc.).

The control unit 250 may be implemented using a microcontroller, such as the rfPIC12F675K ("PIC") by Microchip^{®} of Phoenix, AZ. For example, the PIC is an 8-bit microcontroller having six general purpose input/output (I/O) pins and an analog-to-digital (A/D) converter. While I/O pins may be employed to receive signals from the diaphragm sensor 150b and to provide I/O signals external to the valve 100 via wires, the PIC also includes a radio frequency (RF) transmitter capable of transmitting data by amplitude shift keying (ASK) or frequency shift keying (FSK). Persons of ordinary skill in the art will appreciate that other microcontrollers may be used instead. Alternatively, instead of employing the control unit 250, outputs from the diaphragm sensor 150b may exit the valve 100 via wires and provide signals in a raw (unconditioned) analog and/or digital state for interpretation and/or processing by the control unit 160. However, rather than mounting the diaphragm sensor 150b on a surface of the diaphragm 135, as shown in FIG. 2B, an example diaphragm sensor may also be integrated/embedded within the diaphragm 135.

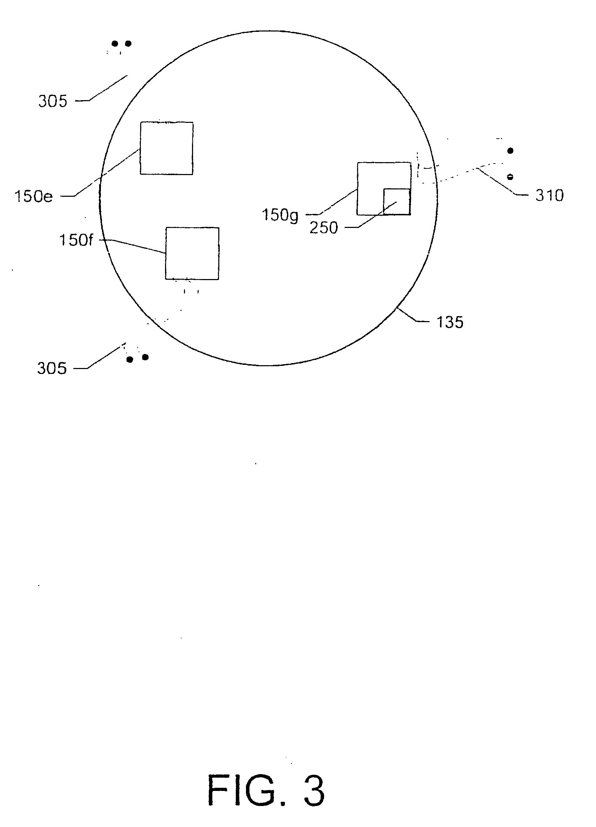

In another example, the diaphragm sensor may be a strain gauge mounted on the diaphragm 135 as shown in FIG. 3. Persons of ordinary skill in the art will appreciate that if a strip of conductive metal is stretched, it mill become longer and thinner. Such material changes have the effect of altering the resistance characteristics of the metal (i.e., electrical resistance increases when a piece of metal is stretched and made thinner). Assuming that the stretching is performed at or below the metallic yielding point, a corresponding compression action of the metal will cause the metal to shorten, thereby decreasing the electrical resistance. Thus, the bi-directional movement of the metal strain gauge can be used to measure a physical characteristic of a surface via the increasing/decreasing resistance of the strain gauge. Generally speaking, the above process is accomplished with strain gauges, which may be mounted on the diaphragm 135 to monitor its operational characteristics. In that case, the control unit 160 may be adapted to process the resistance values of the strain gauges in a manner known to persons of ordinary skill in the art (e.g., using a Wheatstone bridge).

FIG. 3 illustrates the example diaphragm 135 having diaphragm sensors 150e, 150f, 150g configured as strain gauges and mounted to the diaphragm 135. In the illustrated example, each of the diaphragm sensors 150e, 150f includes wires 305 to operatively connect to the control unit 160. Without limitation, the diaphragm sensors 150e, 150, 150g may include the control unit 250 as an integral part of the sensors 150e, 150f, 150g, as shown by the diaphragm sensor 150g. As such, the diaphragm sensor 150g may include wires 310 that attach directly to a warning device (e.g., a flashing light, a siren, etc.) and/or a processing control system to inform a process engineer and/or other person of the diaphragm condition. While the illustrated example includes three strain gauges, persons of ordinary skill in the art will appreciate that fewer or more strain gauges may be used to determine or monitor a condition of the diaphragm 135.

The strain-gauge implementation of the diaphragm sensors 150e, 150f, 150g is initially measured or characterized during a valve actuation cycle or multiple cycles before the valve 100 is installed within a system, such as during a post-manufacturing test or after the sensors 150e, 150f, 150g, are installed on the diaphragm 135. Then, throughout the life of the diaphragm 135, readings (e.g., strain readings) are taken via the diaphragm sensors 150e, 150f, 150g and compared to the initially measured values to track, measure, calculate, and/or observe differences. Changes in the measured values may be indicative of diaphragm wear, physical degradation due to chemical attack, high-cycte count, and/or diaphragm degradation due to thermal fatigue. For example, a diaphragm material may exhibit a greater physical resistance to applied forces when new. However, after many repeated cycles of operation and/or chemical attack by the process media, the diaphragm material may exhibit a lower physical resistance to such applied forces, which are measured by the strain gauges 150e, 150f, 150g. If calculated differences exceed or fall below a predetermined threshold (e.g., a resistance value), then the control unit 160 may alert a process operator and/or other user that preventative maintenance should be performed on the valve 100, thereby eliminating unnecessary diaphragm replacement based on arbitrary, periodic, and/or date-based schedules. Furthermore, in the event that the diaphragm 135 exceeds an expected life cycle (e.g., number of cycles or time in service), the indication that the pre-determined threshold has been met or exceeded allows preventative maintenance prior to a catastrophic failure.

While the above example diaphragm sensors are discussed in view of strain gauges and conductivity sensors for detecting a condition of a diaphragm valve, persons of ordinary skill in the art will appreciate that any other type of diaphragm such as a diaphragm used in a spring-and-diaphragm actuator or a regulator may used in conjunction with other types of electrical, optical acoustic, and/or physical sensing device(s) to monitor the physical or material characteristics (conditions) of the diaphragm. Additionally, while the above examples describe the diaphragm 135 as constructed of an elastomer and/or rubber-like material, persons of ordinary skill in the art will appreciate that any flexible diaphragm, such as metallic diaphragms, may be used and measured without limitation. Thus, the diaphragm sensors described herein may employ optics, acoustics (e.g., SONAR, sound, frequency signatures, etc.), and/or motion (e.g., accelerometer). Accordingly, the diaphragm sensors 150 may be implemented using a voltage sensor, a current sensor, a continuity sensor, an optical sensor, an acoustic sensor, a strain gauge, and/or a motion sensor. Further, any combination of sensors and/or sensor types may be implemented on the diaphragm to monitor the condition of the diaphragm 135.

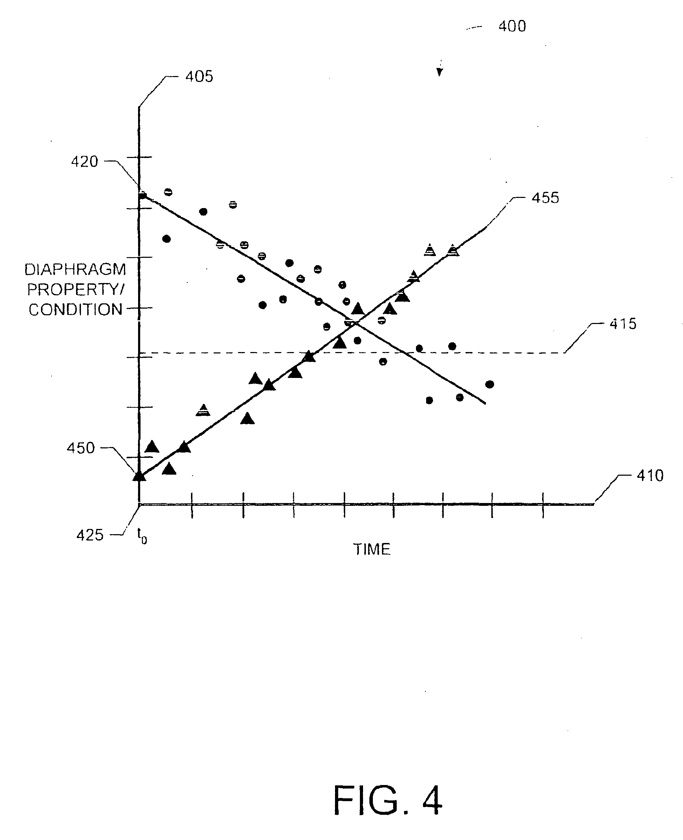

FIG. 4 is an example data graph 400 representing output data from the diaphragm sensor 150 (e.g., one or more of the diaphragm sensors 150a, b, c, d, e, f, and g described above). The output data may be a raw value from the sensor 150 without signal conditioning, or the signal may be conditioned and/or processed to calculate a value that is indicative or a corresponding property or condition of the diaphragm 150. In the illustrated example, a a vertical axis 405 identifies a diaphragm sensor 150 value associated with a diaphragm property or condition (e.g., an opacity, a resistance, a conductance, a force, an acoustic magnitude, etc.), and a horizontal axis 410 identifies a time value. The example data graph 400 also includes a threshold value 415 to identify when the condition of the diaphragm 135 merits or requires replacement. The example threshold value 415 may be theoretically or empirically determined and/or set at a certain value above/below a point at which a failure of the diaphragm 135 is likely to occur. For example, the threshold value 415 may be set at a value 10% higher/lower than an actual expected failure point, thereby allowing maintenance personnel to schedule preventative maintenance in a timely manner.

Persons of ordinary skill in the art will appreciate that, instead of the example data graph 400, the data acquired from the diaphragm sensor(s) 150 may be stored in a tabular format in a memory (e.g., the memory 260 of the control unit 250, a memory of the control unit 160, a hard drive of a personal computer (PC), etc.). In the illustrated example, a first measurement 420 at time (t₀) 425 represents a base-line measurement of an output value representative of some property or condition of the diaphragm 135 provided by the diaphragm sensor 150 before the diaphragm 135 is applied or used in an end-user application (e.g., in a chemical processing plant, cosmetics process, etc.). As time increases, subsequent measured diaphragm sensor 150 values may decrease, which may be indicative of the diaphragm 135 suffering effects of chemical attack and/or temperature fluctuations. If the measured values of the diaphragm sensor 150 drop below the threshold value 415, then the control unit 250 or the control unit 160 may provide a warning signal to alert process personnel that the valve 100 requires maintenance. Similary, a first measurement 450 at time (t₀) 425 represents a base-line measurement of another property or condition of the diaphragm 135 before the diaphragm 135 is applied or used in an end-user application. In this case, diaphragm sensor 150 values increase rather than decrease as the example diaphragm 135 experiences wear over time, as shown by line 455. If the measured valves of the diaphragm sensor 150 rise above the threshold value 415, then the control unit 250 or the control unit 160 may provide a warning signal to alert process personnel that the valve requires maintenance. Persons of ordinary skill in the art will appreciate that diaphragm sensor 150 values associated with different properties or conditions of the diaphragm 135 may follow increasing or decreasing trends in a linear and/or non-linear manner as the diaphragm 135 wears or ages.

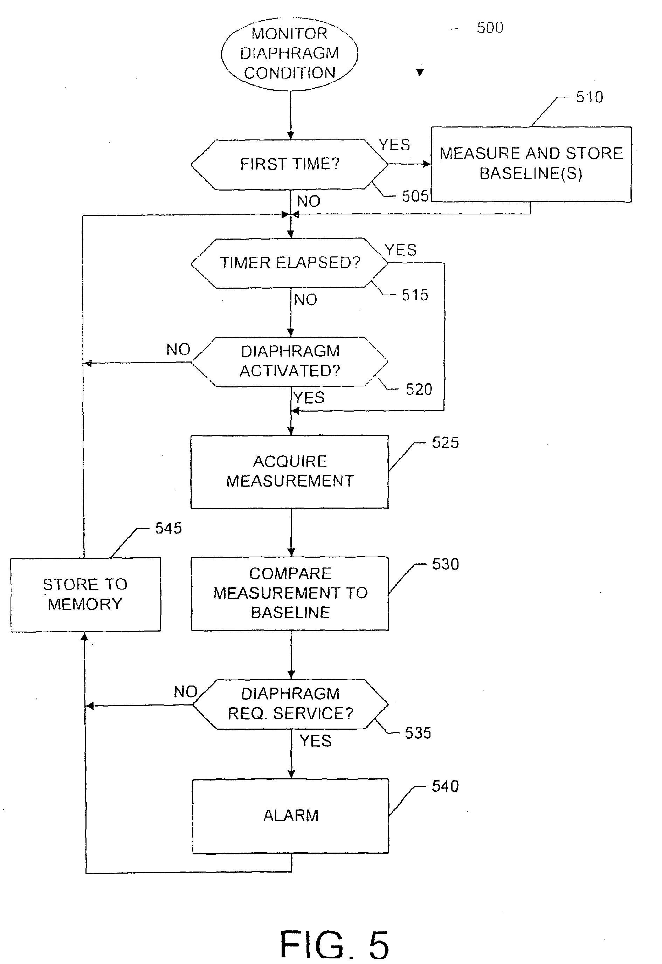

FIG. 5 is a flowchart of an example process 500 to monitor a condition of the diaphragm 135. The process 500 (e.g., using the embedded control unit 250 or the external control unit 160) determines whether the diaphragm 135 is newly installed or never been used before (block 505). If this is the first time that the diaphragm 135 is being used, then the process 500 performs a measurement and stores the result to serve as a baseline measurement value for comparison purposes (block 510). The baseline measurement (block 510) may include having the end-user or the installer generate several baseline measurements to be taken at various positions across the diaphragm 135. For example, one baseline measurement may be taken while the diaphragm is at rest (i.e., the valve is fully open/closed) (e.g., see FIG. 1B), a second baseline measurement may be taken while the diaphragm 135 is fully actuated (e.g., fully closed/open) (e.g., see FIG. 1A), and a third baseline measurement (and any further baseline measurements) may be taken at one or more intermediate positions. Baseline measurements may be stored in a memory, such as the memory 260 of the control unit 250, or a memory of the external control unit 160, such as a PC hard-drive.

After establishing one or more baseline measurements (block 510), or if the diaphragm is not being used for the first time (block 505), then the process 500 initiates a timer (block 515). Persons of ordinary skill in the art will appreciate that the timer is typically implemented programmatically by most microprocessors/microcontrollers, and/or may exist as discrete hardware. As discussed in further detail below, the timer allows the process 500 to capture measurements from the diaphragm sensor 150 at periodic and/or scheduled instances. If the timer has not elapsed, then the process 500 determines whether the diaphragm 135 has been activated (block 520). As discussed above, the diaphragm activation switch 170 may provide the process 500 with an indication of whether the diaphragm 135 has been activated (block 520).

If the diaphragm 135 has not been activated (block 520), then the process 500 continues to wait and monitor for diaphragm activation (block 515). Otherwise, if the diaphragm 135 has been activated (block 520), or if the timer has elapsed (block 515), then the process 500 acquires a measurement from the diaphragm sensor 150 (block 525). The measured value may be stored in a log of the memory (e.g., the memory 260 of the control unit 250) for graphical analysis, as shown in FIG. 5. Additionally, the measured value is compared to the baseline measurement acquired when the diaphragm 135 was new (block 530). For example, if the measurement (block 525) was prompted by an elapsed timer (block 515), then the measurement is compared to the particular vaseline measurement associated with the current diaphragm position. In other words, if the measurement (blocs 525) occurs while the diaphragm 135 is fully actuated, then the fully actuated baseline is compared to the measurement.

To perform the comparison (block 530) the process 500 may calculate a difference, if any, between the baseline measurement and the current measurement to generate a value. Additionally, the process 500 compares that resulting value to a threshold to determine if the diaphragm 135 requires service (block 535). For example, the diaphragm 135 may require service based a measured value exceeding a predetermined threshold, dropping below the predetermined threshold, meeting the predetermined threshold, and/or being within a certain value of the predetermined threshold. For example, the end-user may set the threshold to a value 10% higher than a point at which failure of the diaphragm 135 is expected to occur. As such, the 10% buffer may allow the end-user to schedule preventative maintenance prior to an actual failure of the diaphragm 135. Such preventative maintenance may include notifying a service-person, or alerting a third party contractor to install a new diaphragm upon learning that the threshold has been met/exceeded. If the threshold is met/exceeded (block 535), then the process 500 may invoke or provide an alarm (block 540), otherwise the latest measured value is stored to memory (block 545) and the process 500 repeats. The process 500 may also store associated diaphragm 135 conditions information (block 545) to communicate that the diaphragm is within a certain proximity to the threshold value (e.g., 17% above or below the threshold, value). Alternatively, the status or condition of the diaphragm may be stored (block 645) with readable nomenclature, such as, but not limited to, "new," "moderately aged," "damaged," or "critical."

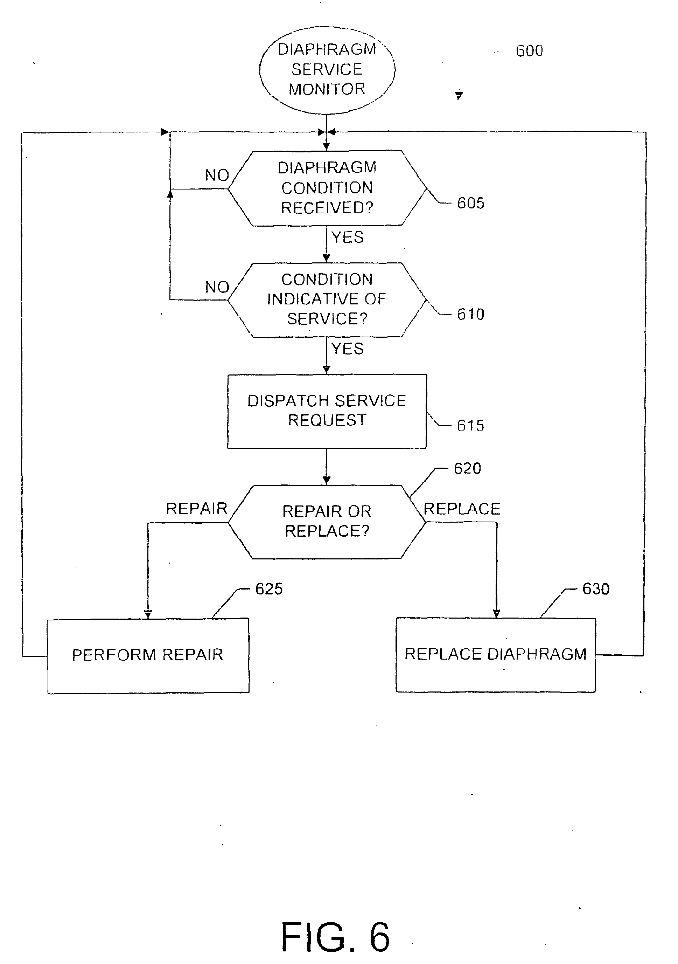

FIG. 6 is a flowchart of another example process 600 to monitor the diaphragm 135 for service needs. The example process 600 (e.g., using the embedded control unit 250 or external control unit 160) determines whether a diaphragm condition has been received (block 605). If no diaphragm condition has been received (blocs 605), the process 600 continues to monitor on a periodic basis, a scheduled basis, or upon activation of the diaphragm, as discussed above. However, if a diaphragm condition has been received/detected (block 605), then the process 600 (e.g., the external control unit 160 or an embedded control unit 250) compares the condition value(s) to a threshold value to determine whether service is advisable or necessary (block 610). For example, if a threshold value associated with a condition associated with wear of the diaphragm 135 is not met and/or the measured condition from the diaphragm sensor 150 is not near a certain range of the threshold (e.g., 17% away from a replacement threshold value), then the process 600 continues to monitor the diaphragm condition.

If service is deemed necessary (block 610), the process 600 provides an alarm signal and/or request to dispatch a service call (block 615). An operator of a process plant may receive the alarm indication and call service personnel, or the service personnel may automatically respond to alarm conditions/service requests from the process 600 upon receipt of a threshold value being met (block 615). The service personnel may arrive at the location of the diaphragm in need of servicing and determine whether a field serviceable device (e.g., a valve) requires an alternate diaphragm, or if the field serviceable device can be repaired (block 620). For example, the service personnel may identify that an alarm condition was the result of a condition unrelated to a poorly functioning diaphragm. Such erroneous alarm conditions may be the result of a broken and/or corroded sensor wire (e.g., wires 172, 222, 224, 240) while the diaphragm may be in good working condition. As such, the service personnel may determine that repair is an appropriate course of action (block 620) and repair the field device (block 625).

On the other hand, the service personnel may determine that repair is not a suitable option to ensure that the field serviceable device operates in a proper working manner. In that case, the field service personnel may decide to replace the diaphragm 135 (block 620). The service personnel may install a new diaphragm (block 630). Alternatively, the service personnel may replace the whole field serviceable device with a new field serviceable device, a refurbished field serviceable device, an alternate functional field serviceable device (e.g., an unused field serviceable device on-site), and/or a refurbished field serviceable device (block 630). Within each of the above field serviceable devices may be a new diaphragm.

Although certain example methods, apparatus and articles of manufacture have been described herein, the scope of coverage of this patent is not limited thereto. On the contrary, this patent covers all methods, apparatus and articles of manufacture fairly falling within the scope of the appended claims.

## Claims

1. A diaphragm (135) for a process control device comprising:
a portion of the diaphragm having a flexible, pressure responsive region; and
a sensor (150, 150a) operatively coupled to the pressure responsive region to provide a signal indicative of a physical condition of the pressure responsive region,
wherein the sensor includes a plurality of conductive wires (210a, 212a, 214a), and each of the plurality of conductive wires is at least one of mounted to the diaphragm or embedded within the diaphragm.

2. A diaphragm as defined in claim 1, wherein plurality of conductive wires is arranged in a concentric manner.

3. A diaphragm as defined in claim 2, wherein a control unit is at least one of integral with the sensor or located external to the sensor, in particular wherein the control unit is at least one of a personal computer, a microprocessor, or a programmable logic controller (PLC).

4. A diaphragm as defined in claim 1, wherein the sensor is at least one of a voltage sensor, a current sensor, a continuity sensor, or an impedance sensor.

5. A diaphragm as defined in claim 1, wherein the pressure responsive region receives a loading pressure from a process control instrument.

6. A diaphragm as defined in claim 1, wherein the pressure responsive region is in direct contact with a process fluid.

7. A fluid control device comprising:
a body;
a fluid passage through the body, the fluid passage including an inlet and an outlet;
the diaphragm according to any of the previous claims, situated within the fluid control device to control the flow of fluid through the passage.

8. A method to determine a diaphragm condition, comprising:
receiving a measured signal from a sensor operatively coupled to a diaphragm, wherein the sensor includes a plurality of conductive wires, and each of the plurality of conductive wires is at least one of mounted to the diaphragm or embedded within the diaphragm;
obtaining a baseline signal; and
comparing the measured signal to the baseline signal to determine the diaphragm condition.

9. A method as defined in claim 8, wherein the measured signal is received when the diaphragm is at least one of in an unactuated position, in a fully actuated position, or in an intermediately actuated position.

10. A method as defined in claim 8, wherein the measured signal is indicative of a voltage, a current, a resistance, a conductance, or a force.

11. A method as defined in claim 8, wherein the baseline signal is measured when the diaphragm is new.

12. A method as defined in claim 8, wherein comparing the measured signal to the baseline signal comprises calculating at least one of a relative difference or an absolute difference between the baseline signal and the measured signal.

13. A method as defined in claim 8, further comprising conveying the diaphragm condition to at least one of a warning indicator or a controller.

14. A method as defined in claim 8, wherein reporting the diaphragm condition comprises storing the measured signal to a memory.

15. A method as defined in claim 8, further comprising comparing the diaphragm condition to a threshold value, and preferably further comprising providing a warning indicator when the diaphragm condition exceeds the threshold value.

## Patentansprüche

1. Membran (135) für eine Prozesssteuerungsvorrichtung, Folgendes aufweisend:
einen Abschnitt der Membran, der einen flexiblen, auf Druck ansprechenden Bereich hat; und
einen Sensor (150, 1500), der in Wirkverbindung mit dem auf Druck ansprechenden Bereich steht, um ein Signal bereitzustellen, das einen physikalischen Zustand des auf Druck ansprechenden Bereichs angibt,
wobei der Sensor mehrere leitfähige Drähte (210a, 212a, 214a) umfasst und jeder der leitfähigen Drähte an der Membran angebracht und/oder in die Membran eingebettet ist.

2. Membran nach Anspruch 1, wobei mehrere Drähte konzentrisch angeordnet sind.

3. Membran nach Anspruch 2, wobei eine Steuereinheit mit dem Sensor eine Einheit bildet und/oder sich extern vom Sensor befindet, insbesondere, wobei die Steuereinheit ein Personalcomputer, ein Mikroprozessor oder eine speicherprogrammierbare Steuerung (PLC) ist.

4. Membran nach Anspruch 1, wobei der Sensor ein Spannungssensor, Stromsensor, Kontinuitätssensor oder Impedanzsensor ist.

5. Membran nach Anspruch 1, wobei der auf Druck ansprechende Bereich von einem Prozesssteuerungsgerät her einen Belastungsdruck aufnimmt.

6. Membran nach Anspruch 1, wobei der auf Druck ansprechende Bereich in direktem Kontakt mit einem Prozessfluid ist.

7. Fluidsteuerungsvorrichtung, Folgendes aufweisend:
einen Körper;
einen Fluiddurchlass durch den Körper, wobei der Fluiddurchlass einen Einlass und einen Auslass umfasst;
eine Membran nach einem der vorhergehenden Ansprüche, die sich in der Fluidsteuervorrichtung befindet, um die Fluiströmung durch den Durchlass zu steuern.

8. Verfahren zum Bestimmen eines Membranzustands, Folgendes umfassend:
Empfangen eines Messsignals von einem Sensor, der in Wirkverbindung mit der Membran steht, wobei der Sensor mehrere leitfähige Drähte umfasst, und jeder der mehreren leitfähigen Drähte an der Membran angebracht und/oder in die Membran eingebettet ist;
Ermitteln eines Grundliniensignals; und
Vergleichen des Messsignals mit dem Grundliniensignal, um den Membranzustand zu bestimmen.

9. Verfahren nach Anspruch 8, wobei das Messsignal eingeht, wenn die Membran in einer unbetätigten Stellung, in einer voll betätigten Stellung und/oder in einer dazwischen liegenden betätigten Stellung ist.

10. Verfahren nach Anspruch 8, wobei das Messsignal eine Spannung, einen Strom, einen Widerstandswert, einen Wirkleitwert oder eine Kraft angibt.

11. Verfahren nach Anspruch 8, wobei das Basisliniensignal gemessen wird, wenn die Membran neu ist.

12. Verfahren nach Anspruch 8, wobei das Vergleichen des Messsignals mit dem Basisliniensignal umfasst, eine relative Differenz und/oder eine absolute Differenz zwischen dem Basisliniensignal und dem Messsignal zu berechnen.

13. Verfahren nach Anspruch 8, darüber hinaus umfassend, den Membranzustand zu einer Warnanzeige und/oder einem Steuergerät weiterzuleiten.

14. Verfahren nach Anspruch 8, wobei das Melden des Membranzustands umfasst, das Messsignal in einem Speicher zu speichern.

15. Verfahren nach Anspruch 8, darüber hinaus umfassend, den Membranzustand mit einem Schwellenwert zu vergleichen, und vorzugsweise darüber hinaus umfasst, eine Warnanzeige bereitzustellen, wenn der Membranzustand den Schwellenwert überschreitet.

## Revendications

1. Diaphragme (135) pour un dispositif de commande de procédé comprenant :
une partie du diaphragme ayant une région flexible, répondant à la pression ; et
un capteur (150, 1500) fonctionnellement couplé à la région répondant à la pression pour produire un signal indicateur d'un état physique de la région répondant à la pression,
où le capteur comprend une pluralité de fils conducteurs et chacun de la pluralité de fils conducteurs est au moins l'un parmi monté sur le diaphragme ou incorporé dans le diaphragme.

2. Diaphragme tel que défini dans la revendication 1, dans lequel la pluralité de fils conducteurs est agencée de manière concentrique.

3. Diaphragme tel que défini dans la revendication 2, dans lequel une unité de commande est au moins l'un parmi intégré au capteur ou situé à l'extérieur du capteur, en particulier dans lequel l'unité de commande est au moins l'un parmi un ordinateur personnel, un microprocesseur, ou un contrôleur logique programmable (PLC).

4. Diaphragme tel que défini dans la revendication 1, dans lequel le capteur est au moins l'un parmi un capteur de tension, un capteur de courant, un capteur de continuité, ou un capteur d'impédance.

5. Diaphragme tel que défini dans la revendication 1, dans lequel la région répondant à la pression reçoit une pression de charge d'un instrument de commande de procédé.

6. Diaphragme tel que défini dans la revendication 1, dans lequel la région répondant à la pression est en contact direct avec un fluide de procédé.

7. Dispositif de commande de fluide comprenant :
un corps ;
un passage de fluide à travers le corps, le passage de fluide comprenant une entrée et une sortie ;
le diaphragme selon l'une quelconque des revendications précédentes, situé dans le dispositif de contrôle de fluide pour contrôler le débit de fluide à travers le passage.

8. Procédé pour déterminer un état d'un diaphragme, comprenant :
la réception d'un signal mesuré depuis un capteur fonctionnellement couplé à un diaphragme, dans lequel le capteur comprend une pluralité de fils conducteurs, et
chacun de la pluralité de fils conducteurs est au moins l'un de monté sur le diaphragme ou incorporé dans le diaphragme ;
l'obtention d'un signal de référence ; et
la comparaison du signal mesuré au signal de référence pour déterminer l'état du diaphragme.

9. Procédé tel que défini dans la revendication 8, dans lequel le signal mesuré est reçu lorsque le diaphragme est dans au moins l'une d'une position non actionnée, une position totalement actionnée, ou une position actionnée de façon intermédiaire.

10. Procédé tel que défini dans la revendication 8, dans lequel le signal mesuré est indicatif d'une tension, un courant, une résistance, une conductance, ou une force.

11. Procédé tel que défini dans la revendication 8, dans lequel le signal de référence est mesuré lorsque le diaphragme est neuf.

12. Procédé tel que défini dans la revendication 8, dans lequel la comparaison du signal mesuré au signal de référence comprend le calcul d'au moins l'une parmi une différence relative ou une différence absolue entre le signal de référence et le signal mesuré.

13. Procédé tel que défini dans la revendication 8, comprenant en outre le transfert de l'état d'un diaphragme vers au moins l'un parmi un indicateur d'avertissement ou un dispositif de commande.

14. Procédé tel que défini dans la revendication 8, dans lequel le signalement de l'état d'un diaphragme comprend le stockage du signal mesuré dans une mémoire.

15. Procédé tel que défini dans la revendication 8, comprenant en outre la comparaison de l'état d'un diaphragme à une valeur de seuil, et de préférence comprenant en outre la génération d'un indicateur d'avertissement lorsque l'état d'un diaphragme dépasse la valeur de seuil.
